# EUROPÄISCHE PATENTANMELDUNG

(11) **EP 1 006 322 A2**
(43) Veröffentlichungstag der Anmeldung: **07.06.2000**
(21) Anmeldenummer: 99204063.4
(22) Anmeldetag: 01.12.1999
(51) Int. Cl.: F24J 3/08, E21B 7/26, E21B 23/00

(54) **Verfahren zum Einbringen von einem Erdwärmetauscher in das Erdreich sowie eine Erdwärmetauschervorrichtung**

(30) Priorität: 04.12.1998 NL 1010725
(71) Anmelder: A.P. van den Berg Beheer B.V., 8445 PK Heerenveen (NL)
(72) Erfinder: van den Berg, Arie Pieter, 8454 LB Mildam (NL); Vallinga, Roelof Martinus, 8603 BA Sneek (NL)
(74) Vertreter: Brookhuis, Hendrik Jan Arnold

(57) **Zusammenfassung**

Verfahren zum in das Erdreich Anordnen eines Erdwärmetauschers (15), der dazu ausgelegt ist, dem umliegenden Boden Wärme zuzuführen, oder zu entziehen, welcher Erdwärmetauscher (15) einen länglichen Körper (3) mit einem oder mehreren Umlaufleitungen für ein Wärmetransportmedium hat.

Das Verfahren umfaßt nachfolgende Schritte:
- das in den Boden Einbringen eines länglichen Hohlrohres (3), wobei sich am unteren Ende des Rohres (3) ein Kopf (10) befindet, welcher Kopf (10) von dem Rohr (3) losgekoppelt ist, oder von diesem losgekoppelt werden kann,
- das Absenken des Erdwärmetauschers (15) in das in das Erdreich eingebrachte Hohlrohr (3) und das Kuppeln des abgesenkten Erdwärmetauschers (15) mit dem Kopf (3), und
- das aus dem Erdreich Hochbringen des Hohlrohres (3) unter Loskopplung des Rohres (3) des Kopfes (10), in solcher Weise, daß der Kopf (10) und der mit diesem gekuppelten Erdwärmetauscher (15) in dem Boden zurückbleiben.

## Beschreibung

Die vorliegende Erfindung bezieht sich auf das in das Erdreich Einbringen eines Erdwärmetauschers, welcher Erdwärmetauscher dazu dient, dem umliegenden Boden Wärme zu entziehen und/oder zuzuführen.

Die Verwendung von Erdwärmetauschern, um dem Boden Wärme zu entziehen, oder gerade zuzuführen, um diese später wieder entziehen zu können, ist allgemein bekannt. So werden in Ländern wie die Schweiz, Deutschland und Österreich Erdwärmetauscher angeordnet, die bis zu einer Tiefe von etwa 100-120 Metern in dem Boden stecken. Um derartige Erdwärmetauscher in dem Boden anzuordnen, wird üblicherweise zuerst ein Loch in das Erdreich gebohrt und anschließend wird der Wärmetauscher in das gebohrte Loch eingesetzt.

Andere Verfahren zum in das Erdreich Einbringen eines Erdwärmetauschers sind auch bekannt. So beschreibt die FR 2 492 043 ein Verfahren, bei dem eine lange Lanze in das Erdreich hineingedrückt wird, welche Lanze an ihrer Unterseite mit einer Rolle, um die eine flexible Umlaufleitung herumliegt, versehen ist. Ein Trum dieser Leitung läuft durch das Innere der Lanze hoch und der andere Trum läuft entlang der Außenseite der Lanze. An der Unterseite der Lanze befindet sich ein um ein Scharnier drehender Deckel, der indem die Lanze in den Boden gedrückt wird, die Unterseite der Lanze abschließt, und der zugleich so groß ist, daß sich ein Schlitz in dem Erdreich bildet, in den der außerhalb entlang der Lanze liegende Trum der Umlaufleitung heineinpaßt. Nachdem die Lanze bis zu der gewünschten Tiefe in den Boden hineingedrückt worden ist, wird die Lanze wieder hochgebracht. Hierbei dreht sich der Deckel um ein Scharnier und bewegt sich mit der Lanze mit hoch, wobei die Umlaufleitung in dem Erdreich zurückbleibt.

Auch ist es bekannt, Erdwärmetauscher in das Erdreich hineineinzurammen, Beispiele dieses Verfahrens sind in der DE 31 14 262 und der EP 0 046 725 beschrieben worden.

Der vorliegenden Erfindung liegt die Aufgabe zugrunde, ein alternatives Verfahren zum in das Erdreich Einbringen eines Erdwärmetauschers, welches Verfahren auf einfache Weise ausführbar ist, und es ermöglicht, das Kostenniveau für die Anwendung von Erdwärmetauschern gegenüber dem heutigen Stand der Technik zu senken, so daß eine Großanwendung von Erdwärmetauschern wirtschaftlich attraktiv wird.

Die vorliegende Erfindung schafft nach ihrem ersten Aspekt ein Verfahren zum in das Erdreich Einbringen eines Erdwärmetauschers nach dem Oberbegriff des Anspruchs 1, der dadurch gekennzeichnet ist, daß das Verfahren die nachfolgenden Schritte umfaßt:
- Das in das Erdreich Einbringen eines länglichen Hohlrohres, wobei sich an dem unteren Ende des Rohres ein Kopf befindet, welcher Kopf vom Rohr losgekoppelt ist, oder von diesem losgekoppelt werden kann,
- Das Absenken des Erdwärmetauschers in das in das Erdreich eingebrachte Hohlrohr, und das Kuppeln mit dem Kopf des abgesenkten Erdwärmetauschers, und
- Das aus dem Erdreich Hochbringen des Hohlrohres unter Auskopplung des Rohrkopfes, in solcher Weise, daß der Kopf und der mit diesem gekuppelten Erdwärmetauscher in dem Boden zurückbleiben.

Die Kupplung des Erdwärmetauschers mit dem in den Boden getriebenen Kopf führt zu dem Ergebnis, daß beim Hochbringen des Hohlrohres der Erdwärmetauscher nicht von dem sich hinaufbewegenden Rohr mitgezogen wird, so daß der Kopf also faktisch wie eine Art Anker wirkt. Diese Verankerung bringt die vorteilhafte Möglichkeit mit sich, die inneren Querschnittsabmessungen des Hohlrohres in solcher Weise auszuführen, daß der Erdwärmetauscher mit einem geringen Spiel dort hineinpaßt, weil die Verankerung sicherstellt, daß der Erdwärmetauscher sich nicht durch Reibung oder Einklemmung in dem Rohr mit hinaufbewegt. Daraus ergibt sich der Vorteil, daß das Hohlrohr wegen des geringen (Außen)-Querschnitts leichter in das Erdreich eingebracht werden kann und zugleich der Vorteil, daß nach dem Entfernen des Hohlrohres die zurückbleibende Umlaufleitung gut mit dem um diese herumliegenden Erdreich in Kontakt kommt.

In einer bevorzugten Ausbildung dieses Verfahrens sind der in dem Boden zurückbleibende Kopf und der Erdwärmetauscher mit zusammenwirkenden Kuppelmitteln versehen, die in solcher Weise ausgeführt sind, daß beim Absenken des Erdwärmetauschers in das in das Erdreich eingebrachte Hohlrohr automatisch eine Kupplung mit dem Kopf realisiert wird. Die Kuppelmittel können zum Beispiel Klemmittel umfassen, aber auch andere Lösungen, wie eine selbsttätig wirkende Hakenkonstruktion oder ein Klettband sind auch denkbar.

In einer Variante kann vorgesehen sein, daß die Kuppelmittel nicht automatisch wirken. Zum Beispiel umfassen die Kuppelmittel dann Gewindemittel, oder eine Art Bajonetverbindung, die erfordern, daß der Erdwärmetauscher gegenüber dem Kopf rotiert wird.

Es wird deutlich sein, daß das in das Erdreich Einbringen des Hohlrohres mit dem in dem Boden zurückbleibenden Kopf mit jedem geeigneten Verfahren stattfinden kann; die Wahl des Verfahrens wird namentlich abhängen von der Bodenbeschaffenheit, der gewünschten Tiefe, und eventuell von der Umgebung, in der der Erdwärmetauscher angeordnet wird. So könnte das Hohlrohr in das Erdreich eingerammt werden, aber wenn bestehende Bebauung vorhanden ist, und/oder der Boden relativ weich ist, so kann das Hohlrohr auch in das Erdreich hineingedrückt werden. Es ist ebenfalls denkbar, daß das Hohlrohr in das Erdreich hineingespült wird.

Es ist möglich, daß zum in das Erdreich Einbringen eines Erdwärmetauschers in der erfindungsgemäßen Weise ein Fahrzeug des Typs, der zum Sondieren des Bodens momentan allgemein bekannt ist, angewendet wird. Ein derartiges Sondierfahrzeug wird unter anderem von Anmelderin auf den Markt gebracht und hat eine Druckvorrichtung, mit der ein aus axialen Segmenten zusammenstellbares Hohlrohr mit einem Kopf an seinem Ende in das Erdreich hineingedrückt werden kann. Die maximale Druckkraft eines momentan handelsüblichen Sondierfahrzeugs beträgt bis zu 20 - 25 Tonnen.

Es ist bekannt, daß in den Niederlanden bis zu einer Tiefe von 20 - 50 Metern eine Temperatur von durchschnittlich 10,3 - 11°C herrscht. Diese Temperatur ist nur ein wenig niedriger als die Temperatur in einer Tiefe von 120 Metern, die durchschnittlich etwa 12°C beträgt. Der niederigere energetische Wirkungsgrad, der die Folge des niedrigeren Temperaturs ist, die zusammenhängt mit der geringeren Tiefe, die, gegenüber einem Bohren, mit dem in das Erdreich Drücken erreicht werden kann, wird jedoch in wirtschaftlichem Sinne in hohem Maße dadurch kompensiert, daß einfache und vorzugsweise an sich bekannte Druckvorrichtungen verwendet werden können.

Die vorliegende Erfindung wird nachfolgend anhand der Zeichnung näher erläutert werden. Es zeigt:
- Figur 1: schematisch das in das Erdreich Einbringen eines erfindungsgemäßen Erdwärmetauschers, und
- Fig. 2a,2b und 2c: den Bereich in der Nähe des in das Erdreich eingebrachten Kopfes im Querschnitt während drei Stadien des erfindungsgemäßen Verfahrens.

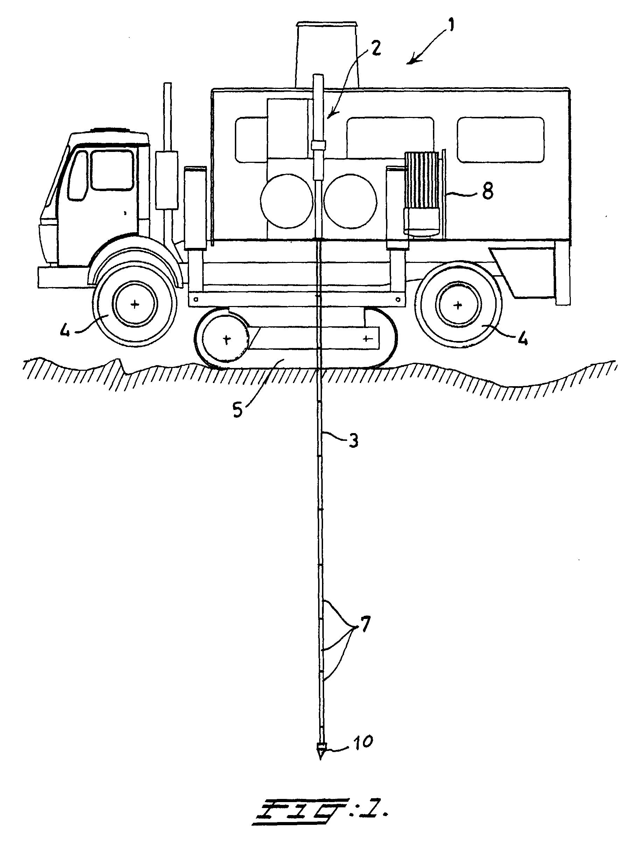

Figur 1 zeigt ein Fahrzeug 1, auf das eine Druck- und Zugvorrichtung 2 aufgestellt worden ist, die auf ein Hohlrohr 3 eine nach unten gerichtete Druckkraft ausüben kann, damit das Rohr 3 in das Erdreich gedrückt werden kann, und die zugleich ein in das Erdreich gedrücktes Rohr 3 wieder aus dem Erdreich herausziehen kann. Das Fahrzeug 1 hat Räder 4, mit denen auf öffentlicher Straße gefahren werden kann, und weiter an jeder Seite des Fahrzeugs 1 eine Raupenkette 5. Mit den nebeneinander liegenden Raupenketten 5 und einem zugehörigen Antrieb kann sich das Fahrzeug 1 auf dem Gelände fortbewegen.

Das Fahrzeug 1 ist mit Stellmitteln versehen, in diesem Beispiel hydraulischen Spreizen zwischen den Raupenketten 5 und dem Chassis des Fahrzeugs 1, zum Einstellen der Position der Druck- und Zugvorrichtung 2 gegenüber dem Boden. Weiter hat das Fahrzeug 1 vorzugsweise Meßmittel zum Messen der Druckkraft, die notwendig ist, das Rohr 3 nach unten zu drücken und zum Messen des Abstandes, um den das Rohr 3 in den Boden gedrückt wurde.

Das Hohlrohr 3 wird aus miteinander kuppelbaren axialen Segmenten 7 zusammengesetzt, die in einem Lagerhalter 8 in dem Fahrzeug 1 gelagert sind. Jedesmal, wenn das Rohr 3 um einen bestimmten Abstand in den Boden gedrückt ist, wird dieses an seinem oberen Ende um ein folgendes Rohrsegment verlängert, bis die gewünschte Tiefe erreicht ist, oder das Rohr 3 nicht weiter in den Boden hineingedrückt werden kann.

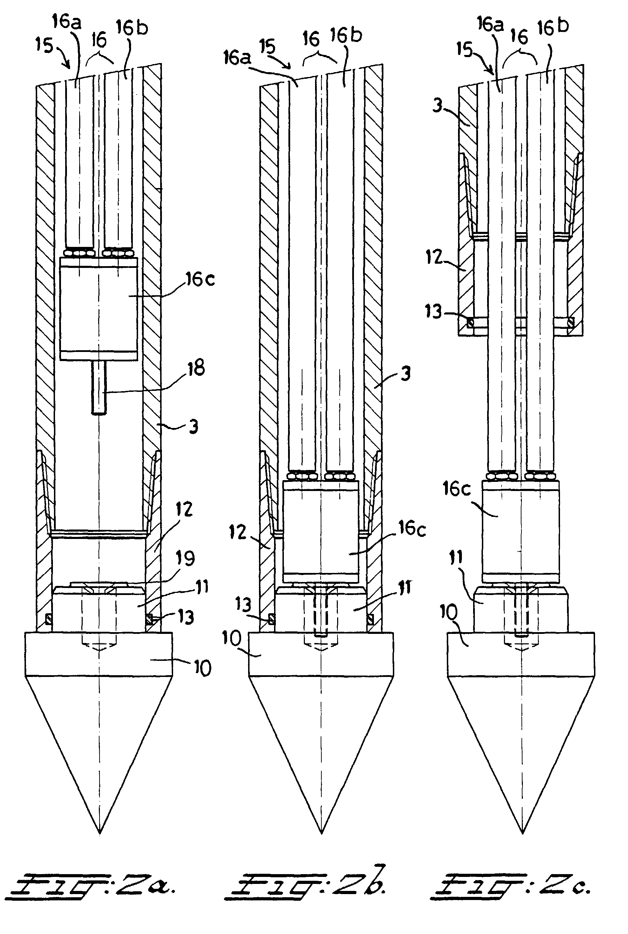

An dem unteren Ende des Hohlrohres 3 ist ein Kopf 10 vorhanden, welcher Kopf 10 nachfolgend erläutert werden wird, insbesondere anhand der Figuren 2a, 2b und 2c.

Aus den Figuren 2a-c ist ersichtlich, daß der Kopf 10 in diesem Beispiel mit einer nach unten gerichteten, eventuell asymmetrischen, Spitze ausgeführt ist, und an seiner Oberseite einen Vorsprung 11 aufweist, der in einer Kopfaufnahmebüchse 12 hineinpaßt, dabei klemmend von Klemmitteln 13, in diesem Fall einem O-Ring, festgehalten wird. Die Kopfaufnahmebüchse 12 ist an dem unteren Segment des Rohres 3, in diesem Beispiel mit einer Gewindeverbindung, festgesetzt. Ersichtlich ist, daß der Querschnitt des Kopfes 10 einigermaßen größer als der des Rohres 3 ist.

Aus den Figuren 2a-c ist weiter der untere Teil eines weiter nicht dargestellten Erdwärmetauschers 15 ersichtlich. Dieser Erdwärmetauscher 15 umfaßt in diesem Beispiel einen schlanken, länglichen Körper, der von einem einzigen Umlaufleitung 16 für ein Wärmetransportmedium, zum Beispiel Wasser, gebildet wird.

Die dargestellte Umlaufleitung 16 ist hauptsächlich aus zwei nebeneinander laufenden Leitungsabschnitten 16a, 16b zusammengesetzt, die an ihrem unteren Ende an ein Anschlußteil 16c, in diesem Beispiel mit einem Uberwurfmutteranschluß, anschließen. In dem Anschlußteil 16c ist ein Kanal vorhanden, der die beiden Leitungsabschnitte 16a, 16b miteinander verbindet. Die Leitungsabschnitte 16a, 16b sind vorzugsweise einigermaßen flexible Leitungsabschnitte aus Kunststoff, aber selbstverständlich können diese Leitungsabschnitte auch aus Metall sein.

Das in das Erdreich Einbringen des Erdwärmetauschers 15 wird folgendermaßen realisiert.

Zuerst wird an der vorgesehenen Stelle mit Hilfe des Fahrzeugs 1 das Rohr 3, das an dem unteren Ende mit dem Kopf 10 versehen ist, in das Erdreich hineingedrückt. Dies geschieht ohne ein Vorhandensein des Erdwärmetauschers in dem Rohr 3.

Wenn der Kopf 10 die gewünschte Tiefe erreicht hat, wird das in das Erdreich Hineindrücken des Rohres 3 beendet. Anschließend wird der Erdwärmetauscher 15 in das sich in dem Erdreich befindende Rohr 3 abgesenkt, wobei das Anschlußteil 16c schließlich in die Nähe des Kopfes 10 (Figur 2a) kommt und anschließend gegen den Kopf 10 stößt (Figur 2b).

Aus den Figuren 2a-c geht hervor, daß der Erdwärmetauscher 15 und der Kopf 10 mit zusammenwirkenden Kuppelmitteln versehen sind, die hier in solcher Weise ausgeführt sind, daß beim Absenken des Erdwärmetauschers 15 in das Rohr 3 automatisch eine Kupplung mit dem Kopf 10 realisiert wird. In diesem Beispiel umfassen diese Kuppelmittel einen mit einem Gewinde oder einer anderen Verzahnung versehenen Vorsprung 18 an dem unteren Ende des Erdwärmetauschers 15, und weiter eine oder mehrere an dem Kopf 10 angeordnete federnde Lippen 19, die mit dem Vorsprung 18 des absenkenden Erdwärmetauschers 15 in Angriff kommen. Die Kuppelmittel sind so ausgeführt, daß, wenn die Kupplung einmal zustande gebracht worden ist, diese aufrechterhalten bleibt, wenn man versucht, den Erdwärmetauscher hinaufzuziehen.

In einer Variante würden die Kuppelmittel, um den Erdwärmetauscher mit dem Kopf zu verbinden auch die Anwendung von Klebstoff, Kunstharz oder ein anderes Haftmittel, wie zum Beispiel Zement, umfassen können.

Beim Absenken des Erdwärmetauschers 15 wird deshalb in einem bestimmten Moment automatisch eine Kupplung zwischen dem Vorsprung 18 und dem Kopf 10 realisiert werden.

In einem darauffolgenden Schritt wird das Rohr 3 aus dem Boden mit Hilfe des Fahrzeugs 1 hochgezogen, wobei jedesmal ein Rohrsegment von dem Rohr losgeschraubt wird. Auch wenn - wegen des geringen Spiels zwischen der Innenseite des sich hinaufbewegenden Rohrs 3 und dem Erdwärmetauscher 15 - die Rede von einer erheblichen Reibung zwischen dem Rohr 3 und dem Erdwärmetauscher 15 ist, so wird sich der Erdwärmetauscher 15 nicht mit hinaufbewegen, weil der Kopf 10 sozusagen als Verankerung des unteren Endes des Erdwärmetauschers 15 in dem Boden dient. Bemerkt sei, daß das Rohr 3, bewußt oder unbewußt, eine oder mehrere Krümmungen aufweisen kann, wodurch die Reibung noch größer sein wird, als wenn das Rohr 3 gerade ist. Weiter werden auch die Abschnitte 16a und 16b der Umlaufleitung 16 in der Praxis gekrümmt sein und deshalb an der Innenseite des Rohres 3 anliegen.

Der Kopf 10 ragt in diesem Beispiel aus dem Rohr 3 heraus, wodurch gefördert wird, daß der Kopf 10 beim Hinaufziehen des Rohres 3 zurückbleibt. Es ist aber auch denkbar, daß der Kopf den gleichen, oder sogar einen kleineren Querschnitt als das Rohr hat und, um den Kopf fest in dem Boden zu festzusetzen, dabei mit Verankerungsmitteln, zum Beispiel einem oder mehreren nach außen zu bewegenden Ankervorsprüngen, versehen ist. Der Kopf könnte auch wie ein in einer anderen Weise im Querschnitt expandierbarer Kopf ausgeführt sein.

Aus Figur 2c ist ersichtlich, daß das Rohr 3 hinaufbewegt ist und dabei vom Kopf 10 losgekoppelt ist, so daß der Kopf 10 in dem Boden zurückbleibt. Zugleich ist ersichtlich, daß der Erdwärmetauscher 15 von dem Kopf 10 festgehalten wird. In diesem Beispiel wird der Kopf 10 gleichsam automatisch von dem Rohr 3 losgekoppelt, wenn das Rohr hinaufgezogen wird. Es ist auch denkbar, daß von einer betätigbaren Verriegelung zwischen dem Kopf und dem Rohr die Rede ist, welche Verriegelung betätigt werden kann, um den Kopf und das Rohr loszukoppeln.

Dadurch, daß der Erdwärmetauscher 15 erst angeordnet wird, wenn das Rohr 3 (nahezu) bis zur gewünschten Tiefe in das Erdreich eingetrieben ist, kann in vorteilhafter Weise mit einem Hohlrohr 3, das aus aneinander zu befestigenden Rohrsegmenten zusammengesetzt wird, gearbeitet werden. Dabei werden diese Rohrsegmente dann, während sie in das Erdreich gedrückt werden, nachgerade aneinander befestigt. Hierbei ist der Erdwärmetauscher kein störender Faktor, weil dieser dann noch nicht in dem Rohr 3 vorhanden ist. Außerdem ist es bei diesem Verfahren zulässig, auf das obere Ende des Rohres 3 zu drücken, ohne das Risiko eines Einklemmens des Erdwärmetauschers 15, da dieser dann noch nicht angeordnet ist.

In einer nicht dargestellten Variante ist es denkbar, daß Mittel vorgesehen sind, um den Erdwärmetauscher in dem Rohr 3 hinabzubewegen, namentlich wenn, zum Beispiel durch eine Krümmung des Rohres 3, beim Absenken des Erdwärmetauschers 15 eine große Reibung überwunden werden muß. In deren möglicher Ausführung ist an dem Kopf 10 ein Flaschenzug angeordnet, um den ein Einziehdraht, der mit dem Erdwärmetauscher kuppelbar ist, herumläuft, um diesen in dem Rohr 3 hinunterzuziehen.

In einer anderen Variante könnte vorgesehen sein, daß das Anschlußteil 16c dichtend in dem Rohr 3 hineinpaßt und Gas- oder Flüssigkeitsdruck benutzt wird, um das Anschlußteil - und die damit gekuppelten Leitungsteile 16a, 16b in Richtung auf den Kopf 10 zu treiben.

Die beiden Leitungsteile 16a, 16b der Umlaufleitung können an deren Oberseite jeweils mit einem Zu- und Abfuhranschluß für das Wärmetransportmedium versehen sein.

## Patentansprüche

1. Verfahren zum in das Erdreich Einbringen eines Erdwärmetauschers, welcher dazu ausgelegt ist, dem umliegenden Boden Wärme zu entziehen und/oder zuzuuführen, welcher Erdwärmetauscher einen länglichen Körper mit einer oder mehreren Umlaufleitungen für ein Wärmetransportmedium hat, **dadurch gekennzeichnet**, daß das Verfahren die nachfolgenden Schritte umfaßt:
- Das in das Erdreich Einbringen eines länglichen Hohlrohres (3), wobei sich an dem unteren Ende des Rohres ein Kopf (10) befindet, welcher Kopf (10) vom Rohr (3) losgekoppelt ist, oder von diesem losgekoppelt werden kann,
- Das Absenken des Erdwärmetauschers (15) in das in das Erdreich eingebrachte Hohlrohr (3), und das Kuppeln mit dem Kopf (10) des abgesenkten Erdwärmetauschers (15), und
- Das aus dem Erdreich Hochbringen des Hohlrohres (3) unter Auskopplung des Rohres (3) des Kopfes (10), in solcher Weise, daß der Kopf (10) und der mit diesem gekuppelten Erdwärmetauscher (15) in dem Boden zurückbleiben.

2. Verfahren nach Anspruch 1, bei dem Kuppelmittel angewendet werden, die in solcher Weise ausgeführt sind, daß beim Absenken des Erdwärmetauschers automatisch eine Kupplung mit dem Kopf realisiert wird.

3. Verfahren nach Anspruch 1 oder 2, bei dem ein Kopf angewendet wird, der solche Abmessungen hat, daß der Kopf (10) aus dem Hohlrohr hinausragt.

4. Verfahren nach einem oder mehreren der vorhergehenden Ansprüche, bei dem jede Umlaufleitung (16) zwei Leitungsteile aus Kunststoff umfaßt, die sich zwischen der Oberseite und der Unterseite des Erdwärmetauschers (15) erstrecken, wobei die Leitungsteile (16a, 16b) an der Unterseite über ein Anschlußteil (16c) miteinander verbunden sind.

5. Verfahren nach einem oder mehreren der vorhergehenden Ansprüche, bei dem das Hohlrohr (3) in einer Kurvenbahn in das Erdreich gedrückt wird.

6. Verfahren nach einem oder mehreren der vorhergehenden Ansprüche, bei dem ein aus miteinander kuppelbaren axialen Rohrsegmenten zusammensetzbares Rohr (3) verwendet wird.

7. Verfahren nach einem oder mehreren der vorhergehenden Ansprüche, bei dem ein verfahrbares Fahrzeug (1), auf dem eine Druck- und Zugvorrichtung (2) für das Rohr (3) angeordnet ist, wobei das Fahrzeug mit Mitteln (6) zum Einstellen der Position der Druck- und Zugvorrichtung (2) gegenüber dem Erdreich versehen ist.

8. Erdwärmetauschervorrichtung, die dazu ausgelegt ist, in dem Erdreich angeordnet zu werden, um dem umliegenden Boden Wärme zu entziehen und/oder zuzuführen, umfassend einen Erdwärmetauscher mit einem oder mehreren Umlaufleitungen für ein Wärmetransportmedium, welche Umlaufleitungen sich zwischen der Oberseite under der Unterseite des Erdwärmetauschers erstrecken, weiter umfassend einen Kopf, der dazu vorgesehen ist, an der Unterseite des Erdwärmetauschers angeordnet zu werden, **dadurch gekennzeichnet**, daß der Erdwärmetauscher (15) und der Kopf (10) mit zusammenwirkenden Kuppelmitteln, die eine automatische Kupplung zustande bringen, wenn sich der Erdwärmetauscher dem Kopf nähert, versehen ist.

9. Erdwärmetauschervorrichtung nach Anspruch 8, bei der der Kopf zum darauf Angreifen eines Hohlrohres (3) ausgelegt ist, mit welchem eine Kraft auf den Kopf ausgeübt wird, damit der Kopf in das Erdreich eingebracht werden kann.

10. Erdwärmetauschervorrichtung nach Anspruch 8 oder 9, bei der der Erdwärmetauscher eine einzige Umlaufleitung (16) hat, die im wesentlichen aus zwei parallelen Leitungsteilen (16a, 16b) besteht.

11. Erdwärmetauschervorrichtung nach einem oder mehreren der Ansprüche 8 - 10, bei der der Kopf (10) eine nach unten gerichtete Spitze hat, die in solcher Weise asymmetrisch ausgeführt ist, daß der Kopf sich während des Hineindrückens in das Erdreich in eine vorgegebene Richtung seitwärts zu der Kraft, die von dem Rohr auf den Kopf ausgeübt wird, bewegen möchte.
